(19)

**Europäisches Patentamt**
**European Patent Office**
**Office européen des brevets**

(11)　**EP 1 493 298 B1**

(12)　　　　　　　　　**EUROPEAN PATENT SPECIFICATION**

(45) Date of publication and mention
of the grant of the patent:
**25.07.2007　Bulletin 2007/30**

(51) Int Cl.:
***H04Q 11/04*** (2006.01)　　　***H04L 12/28*** (2006.01)

(21) Application number: **02718088.4**

(22) Date of filing: **04.02.2002**

(86) International application number:
**PCT/EP2002/001135**

(87) International publication number:
**WO 2003/067920 (14.08.2003 Gazette 2003/33)**

(54) **METHOD AND APPARATUS FOR MUTLIPLEXING DIAL-UP INTERNET SESSIONS**

VERFAHREN UND VORRICHTUNG ZUR MULTIPLEXIERUNG VON WÄHLINTERNETSITZUNGEN

PROCEDE ET APPAREIL DE MULTIPLEXAGE DE SESSIONS INTERNET COMMUTEES

(84) Designated Contracting States:
**AT BE CH CY DE DK ES FI FR GB GR IE IT LI LU MC NL PT SE TR**

(43) Date of publication of application:
**05.01.2005　Bulletin 2005/01**

(73) Proprietor: **TELEFONAKTIEBOLAGET LM ERICSSON (publ)**
**164 83 Stockholm (SE)**

(72) Inventor: **LEAHY, William**
**Cartrontroy,Athlone (IE)**

(74) Representative: **Sjöberg, Mats Hakan**
**Ericsson AB**
**Patent Unit IP Networks**
**Box 1505**
**125 25 Älvsjö (SE)**

(56) References cited:
EP-A- 0 905 998　　　　EP-A- 1 058 476
WO-A-98/48590　　　　US-B1- 6 215 796

• **MORITA S ET AL: "ELASTIC BASKET SWITCHING APPLICATION TO DISTRIBUTED PBK" INTERNATIONAL CONFERENCE ON COMMUNICATIONS (ICC87), SEATTLE, vol. 2, 7 - 10 June 1987, pages 789-793, XP002063261 IEEE, NEW YORK, US**

**Description**

**TECHNICAL FIELD**

The present invention relates to a method and apparatus for multiplexing dial-up internet sessions. In particular, it relates to a method and apparatus for multiplexing dial-up internet sessions by combining the dial-up internet sessions in a timeslot.

**BACKGROUND OF THE INVENTION**

In data communication, such as Internet access, dial-up connections are made to a local exchange, where the data (internet protocol packets) is terminated in a modem bank. The data is then multiplexed onto an E1 (2.048Mb/s rate, multiplexed line) or multiple E1s for transmission to an Internet Service Provider (ISP).
The links between the local exchange and the exchange serving the ISP are composed of E1 trunks, operated at 2Mbits/s or larger STM1, digital optical transmission lines, operating at 155Mbits/s. Over these lines, a circuit-switched connection is established per user. Each of these connections occupies 64kbits/s timeslots.
Normally, a dial-up Internet connection uses standard 64kbits/s connections across the PSTN to the local exchange. However, the dial-up Internet connection will never actually require a 64kbits/s upstream. This is because currently available digital and analogue modem pairs for use in connecting to the PSTN have data rates of up to 56kbits/s downstream and 33.6kbits/s upstream. Although the maximum downstream data transmission rate is 56kbits/s, a more realistic speed is 40-44kbits/second (the achieved data transmission rate). The achieved data transmission rate is dependent on a number of factors, one of which is the line quality.
The data rate is also dependent on the network congestion between the user's PC or terminal and the remote server or proxy-cache server. This can further reduce the maximum achievable data rate. The data rate can also be affected by the long periods of inactivity when the user is preparing a request or reading a response, for example, which would naturally occur during normal Internet use.
There has been a rapid increase in the use of the Internet in recent years and the volumes of data transmitted during Internet access has increased which require increasing resources of the PSTN Network. If the user is achieving a data rate of less than 64kbits/s. then the usage of the channel is not optimum. Since most dial-up connections can expect only circa 40kbits/s, then the usage of the PSTN and/or the circuit-switched connection is never at optimum levels.
One solution is to increase the speed of the modems to make these more closely match the rates of the PSTN, E1 or STM1 links. However, there are physical constraints on the speed modems can operate at over normal PSTN connections. The next generation modems will focus on shorter set up times and the ability to place a data connection on hold, so as to take a voice call.
Another solution is proposed by US 5809070 in which the Internet packets are separated between multiple modems. However this system would still transmit the Internet packet over the PSTN at the same rate as mentioned above and usage of the PSTN is not at its optimum.
Another such system is disclosed in document EP 905 998.

**SUMMARY OF THE INVENTION**

The aim of the present invention is to provide a method and apparatus which enables more efficient use of the PSTN Transit Network. This may be achieved by multiplexing multiple dial-up Internet sessions onto 64kbits/s timeslots.
In the present invention, it is proposed to multiplex calls or dial-up connections by combining them in a timeslot(s).
According to an aspect of the present invention, there is provided a method of communicating a plurality of calls over a communication link in a plurality of timeslots. Calls identified as calls to an Internet Service Provider (ISP) are combined such that n calls are transmitted in a timeslot, wherein n is a positive integer or fraction.
The method may further comprise the step of: de-multiplexing the calls by separating the combined calls into their separate distinct calls.
According to a second aspect of the present invention, there is provided apparatus for multiplexing a plurality of calls to an Internet Service Provider (ISP) for transmission in a plurality of timeslots, the apparatus comprising a combining unit for combining n calls to an ISP in an assigned timeslot, wherein n is a positive integer or fraction.
According to a third aspect of the present invention, there is provided a communication system for communicating a plurality of calls over a communication link, the communication link transmitting calls in a plurality of timeslots. The system comprises means for identifying a call to an Internet Service Provider and means for multiplexing each call identified as a call to an ISP. The multiplexing means combines n calls identified as a specific type of call in a timeslot, wherein n is a positive integer or fraction.
The present invention uses the same concept to dial-up connections over PSTN, between the local exchange serving the end user terminal (for example a modem in a PC), and the local exchange serving the ISP.

In effect, multiplexing/demultiplexing apparatus is provided, used for dial-up data connections. On recognising that a call is to an ISP, for example, either by virtue of the B-number, or other method, the call is routed (as a 64kbits/s channel) to the multiplexing apparatus of the present invention, where it is combined with other similar calls before sending it onto the ISP.

At the exchange serving the ISP, the calls are again routed through demultiplexing apparatus, and reconstituted as distinct 64kbits/s channels before being passed to the ISP.

Therefore, the amount of bandwidth needed to support dial-up Internet traffic is reduced. In this way less of the telephone network is given over to generating Internet traffic. Therefore, service providers can lease less capacity from the network provider to support the Internet traffic and the Network is utilised more efficiently.

The invention is characterised by the independent claims 1 and 7. Further embodiments can be found in the dependent claims.

## BRIEF DESCRIPTION OF DRAWINGS

Figure 1 is a block schematic diagram of a communication system incorporating the apparatus in accordance with the present invention;

Figure 2 is a block schematic diagram of the apparatus in accordance with a first embodiment of the present invention;

Figure 3a illustrates separate connections of the end user of the communication system of Figure 1;

Figure 3b illustrates the call mapping in accordance with the first embodiment of the present invention;

Figure 4 illustrates the call mapping in accordance with a second embodiment of the present invention;

Figure 5 is a block schematic diagram of the apparatus in accordance with a second and third embodiment of the present invention; and

Figure 6 illustrates the call mapping in accordance with a third embodiment of the present invention.

## DETAILED DESCRIPTION OF PREFERRED EMBODIMENTS

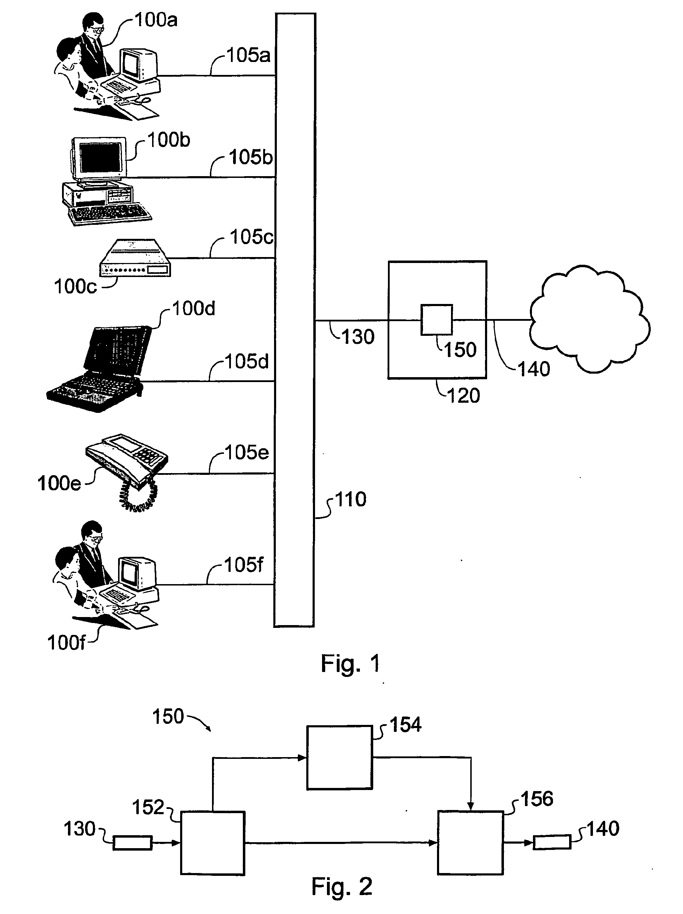

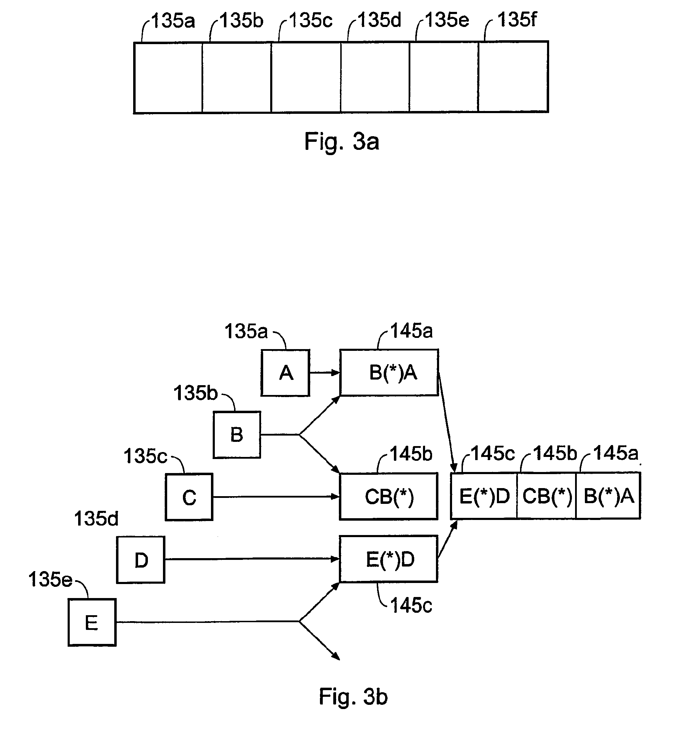

With reference to Figures 1, 2, 3a and 3b, the first embodiment of the present invention will be described. The communication system comprises a plurality of end users 100a to 100f, for example user terminals, PCs and modems etc are connected to the PSTN Transit Network via separate connections 105a to 105f and an access controller or node 110 as standard in the art. Data transmitted from each end-user 100a to 100f is routed onto the communication link 130 in separate bandwidths 135a-135f as shown in Figure 3a. The communication link 130 transfers the data to a local exchange or central office 120 where the data is terminated into a modem bank and multiplexed onto a circuit-switched communication link 140 such as an E1 link, multiple E1s (or T1, STM1, etc). A circuit-switched connection is established over the E1 type link 140 having timeslots of 64kbits/s. Multiplexing apparatus 150, as shown in Figure 2, according to a first embodiment of the present invention, is incorporated in the central office or local exchange 120.

The multiplexing apparatus 150 comprises an identifier 152 for identifying the type of call transmitted in the separate bandwidths 135a to 135f. The input of the identifier 152 is connected to the communication link 130. The outputs of the identifier 152 are connected to a combining unit 154 and an output multiplexer 156. The output multiplexer 156 comprises a plurality of output channels connected to the circuit-switched communication link 140.

An incoming call is routed to the identifier 152 in which the type of call is determined. In the preferred embodiment, the call contains an identifying code such as the B-number. If a call is identified as a conventional call, the call is routed directly to the output multiplexer 156 to be transferred onto the link 140 in accordance with the conventional method mentioned above. If a call is identified as a call to an Internet Service Provider, the call is routed to the combining unit 154. Here, the call is combined into an assigned timeslot(s) of the circuit-switched communication link 140.

In accordance with the first embodiment, the calls are combined based on a static mapping illustrated in Figure 3b, in which each call is assumed to require the same bandwidth, and the output multiplexer 156 always allows for this bandwidth. Once a connection is made, the timeslot is assigned, regardless of whether it is currently in use or not. The second connection is similar to the first except if the timeslot is not currently in use; it is allocated to the next connection requiring bandwidth.

The mapping of calls to timeslots is static and based on a mathematical formula based on the average bandwidth required for dial-up connections, for example:

$$3\,(\text{calls})\,\text{x40bits/s} \leq 2\,(\text{timeslots})\,\text{x64kbits/s}$$

This is a simple mapping allocating 1.5 calls to each timeslot. Although 1.5 calls are combined in this embodiment, it can be appreciated that any number or fraction of calls may be combined, depending on the bandwidth required for the call and the capacity of the link. In formulating the number of calls to be combined, it would also be necessary to consider, for example, the overhead to allow for differentiation of the different calls within the timeslot.

As shown in Figure 3a, the multiplexing apparatus 150 receives the separate calls 135a-135f made by the users 100a-100f. The multiplexing apparatus 150, according the present invention, multiplexes the call into assigned timeslots on the inter-exchange link 140, so that one timeslot contains call 135a and a percentage of the call 135b, the next timeslot contains the remainder of the call 135b and the call 135c., etc. In this way a fixed mapping occurs to allocate each call either to one timeslot in its entirety, or sharing a timeslot with another call. The output channels of the output multiplexer 156 then route the combined calls as normal to the circuit-switched communication link 140. It would therefore be possible to fit up to 45 calls to an ISP onto 30 channels, a bandwidth saving of 33%.

Although not illustrated here, it is appreciated that functionality would be required at the other end of the connection to break-up and re-assemble the affected calls. Thus, at the terminating end, it would be necessary to de-multiplex the 45 calls back into 45 distinct separate connections.

The second embodiment according to the present invention comprises a system and method for mapping calls to timeslots dynamically, ie. the way calls are mapped onto the timeslots is based on whether the connections are currently active or not. The mapping ratio is fixed.

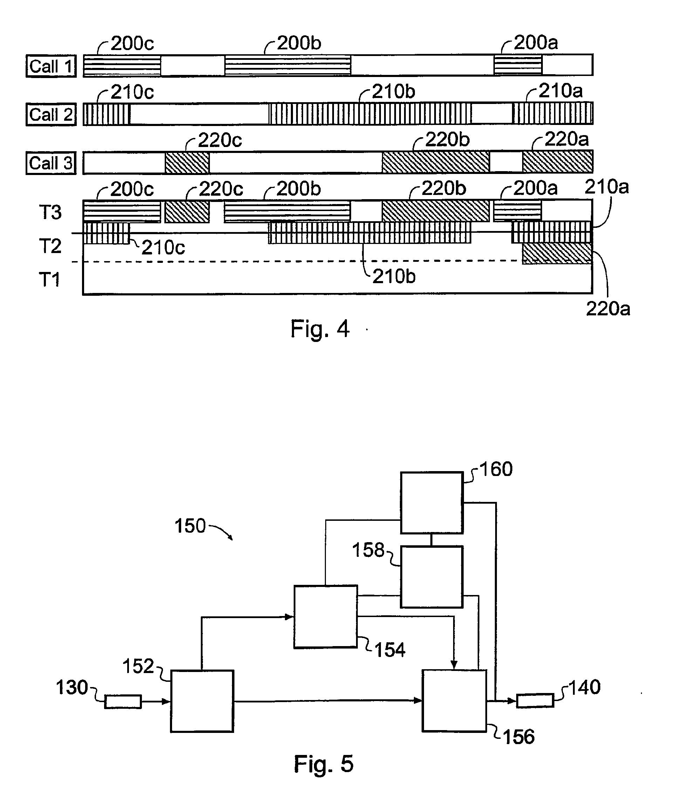

The apparatus according the second embodiment of the present invention, as shown in Figure 5, is similar to that of the first embodiment. The apparatus of the second embodiment further comprises a scheduler 158 connected to the combining unit 154 and the output multiplexer 156. The apparatus 150 further comprises a control unit 160 connected to the scheduler 158, combining unit 154 and the circuit-switched communication link 140.

Internet connections, even while active, are not always transmitting/receiving data at a steady rate. Consequently6, not all the connections will have a fixed connection at all times. The scheduler 158 ensures that all connections get access to the bandwidth to the ISP, even though they may not have fixed connections at all times.

As illustrated in Figure 4, three connections CALL1, CALL2 and CALL3 are made. The identifier 152, as described with reference to the first embodiment above, identifies the type of each call.

In this case, it is assumed that connections CALL1, CALL2 and CALL3 contain calls which have been identified as calls to an Internet Service Provider. These calls are routed to the combining unit 154. Here the calls are combined by the combining unit 154. The scheduler 158 and the control unit 160 control the combination of the calls. The scheduler 158 determines if the call requires bandwidth at the present time, and allocates it to the next free timeslot(s) as required. Each timeslot T1, T2, T3 etc is allocated calls on a first come, first served basis. The controller 160 determines when a call no longer needs bandwidth, and informs the scheduler 158 to remove that call from the connection and replace it with another, as required.

As illustrated in Figure 4, CALL1 comprises a plurality of data transmission packets 200a, 200b, 200c, CALL2 comprises a plurality of data transmission packets 210a, 210b, 210c and CALL3 comprises.a plurality of data transmission packets 220a, 220b, and 220c. In the example illustrated in Figure 4, 1.5 data transmission packets are allocated to each timeslot. Therefore, on receipt of data packets 220a and 210a, these are combined such that data packet 220a is allocated to T2 and is combined with a percentage (50% in this case) of data packet 210a, the remainder of data packet 210a being allocated to timeslot T3. Data packet 200a is allocated timeslot T3 and combined with the remainder of data packet 210a. Upon termination of the data packet 200a, the controller 160 determines that the connection CALL1 no longer requires bandwidth and informs the scheduler 158 to remove CALL1 from the connection and, upon receipt of the data packet 220b, allocates this data packet to timeslot T3. This is combined with a percentage (50% in this case) of data packet 210b and the remainder of data packet 210b is allocated to timeslot T2 and so on.

The output channels from the output multiplexer 156 are routed, as normal, to an E1 (or T1, STM1, etc) link 140.

In accordance with the method and system of the second embodiment of the present invention it is possible to fit up to "n" calls to an ISP onto 30 channels, where "n" may typically be in the region of 60-150, resulting in a bandwidth saving of, say, 50-80%.

Although not illustrated here, it can be appreciated that functionality would be required at the other end of the connection to break-up and reassemble the affected calls, thus de-multiplexing the calls back onto the distinct separate connections.

The third embodiment comprises a system and method for mapping calls to timeslots dynamically, ie. the way the calls are mapped onto timeslots is based on whether the connection is currently active or not and on the bandwidth required for the connection. So, for example, this would utilise a scheduling mechanism to ensure that all connections get access to the bandwidth to the ISP, even though they do not have a fixed connection at all times. This would be a complex mapping, perhaps allocating "n" calls to each timeslot, and relying on the fact that Internet connections even while active are not always transmitting/receiving data at a steady rate.

The apparatus according the third embodiment of the present invention is similar to that described above with reference to the second embodiment.

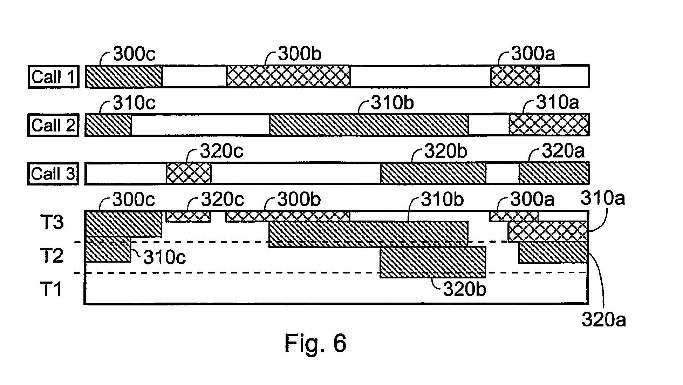

As illustrated in Figure 6, three connections CALL1, CALL2 and CALL3 are made. The identifier 152 as described with reference to the first and second embodiments identifies the type of each call.

Assuming that the connections CALL1, CALL2 and CALL3 as shown in Figure 6 have calls identified as calls to an Internet Service Provider, these calls are combined by the combining unit 154, scheduler 158 and the controller 160. The scheduler 158 determines if the call requires bandwidth just now, and allocates it the next free timeslot(s) as required. Each timeslot T1, T2, T3 etc is allocated calls on a first come, first served basis and the bandwidth needed is based on the measured amount of bandwidth required by the call. The controller 160 determines when the call allocated bandwidth no longer needs bandwidth, and informs the scheduler 158 to remove that call from the connection and replace it with another, as required.

As illustrated in Figure 6, the connection of CALL1 comprises a plurality of data transmission packets 300a, 300b, 300c, CALL2 comprises a plurality of data transmission packets 310a, 310b, 310c and CALL3 comprises a plurality of data transmission packets 320a, 320b and 320c. In the example illustrated in Figure 6 data packets 300a, 300b, 310a and 320c require a low bandwidth and the remaining data packets require a high bandwidth. On receipt of data packets 320a and 310a, these are allocated to timeslots T2 and T3, respectively. Upon receipt of data packet 300a, this can be combined with data packet 310a in timeslot T3 as it only requires a low bandwidth. Upon termination of the data packet 320a, the controller 160 determines that connection CALL3 no longer requires bandwidth and informs the scheduling means 158 to remove CALL3 from the connection and upon receipt of the data packet 320b allocates this data packet to timeslots T1 and T2. A portion of data packet 310b is combined with data packet 320b in timeslot T2 and the remainder of data packet 310b is allocated timeslot T3 as connection CALL1 no longer requires bandwidth. Data packet 300b is then allocated time slot T3 and combined with the remainder portion of data packet 310b and so on.

The output channels of the output multiplexer 156 are routed, as normal, to the circuit-switched communication link 140. In accordance with the method and system of the third embodiment of the present invention it is possible to fit up to "n" calls to an ISP onto 30 channels, where "n" may typically be in the region of 60-150, resulting in a bandwidth saving of, say, 50-80%.

Although not illustrated here, it can be appreciated that, at the terminating end, it would be necessary to de-multiplex the calls back onto distinct separate connections.

Although preferred embodiments of the method and apparatus of the present invention has been illustrated in the accompanying drawings and described in the forgoing detailed description, it will be understood that the invention is not limited to the embodiments disclosed, but is capable of numerous verifications, modifications without departing from the scope of the invention as set out in the following claims.

**Claims**

1. A method of communicating a plurality of calls over a communication link, the method comprising the steps of:

   transferring the plurality of calls to a local exchange;
   identifying a call to an Internet Service Provider, hereafter referred to as ISP; and
   multiplexing each call identified as a call to an ISP, multiplexing including
   the step of combining n calls identified as a call to an ISP in an assigned timeslot, wherein n is a positive integer or fraction; and
   transmitting the combined calls over the communication link in the assigned timeslot.

2. A method according to claim 1, wherein each call comprises a call identifier such that the type of call is identified on the basis of recognising the call identifier.

3. A method according to any one of the preceding claims, wherein the timeslot is assigned dynamically.

4. A method according to claim 3, wherein the timeslot is assigned on the basis of a measured amount of bandwidth required by the call.

5. A method according to any one of the preceding claims, wherein the assignment of a timeslot is on the basis of first come, first served.

6. A method according to any one of the preceding claims, wherein the method further comprise the step of:

   receiving the combined call at a destination local exchange;
   de-multiplexing the combined call by separating the combined call into its separate distinct calls; and
   transferring the separate distinct calls to their destination.

7. A communication system for communicating a plurality of calls over a communication link, the communication link connecting at least two local exchanges, the system comprising:

   means for transferring the plurality of calls to one of the at least two local exchanges;
   means for identifying a call to an Internet Service Provider hereafter referred to as ISP;
   means for multiplexing each call identified as a call to an ISP, the multiplexing means including means for combining n calls identified as a call to an ISP in an assigned timeslot; and
   means for transmitting the combined calls in the assigned timeslot over the communication link to another of the at least two local exchanges.

8. A communication system according to claim 7, wherein the call comprises a call identifier and means for recognising the call identifier.

9. A communication system according to any one of claims 7 or 8, wherein the communication link comprises a circuit-switched connection of a PSTN.

10. A communication system according to any one of claims 7 to 9 further comprises scheduling means for scheduling the calls to assign a timeslot.

11. A communication system according to any one of claims 7 to 10, wherein the system further comprises:

   means for receiving the combined call at said another of the at least two local exchanges;
   means for de-multiplexing the combined call by separating the combined call into its separate distinct calls; and
   means for transferring the separate distinct calls to their destination.

**Patentansprüche**

1. Verfahren zum Kommunizieren einer Mehrzahl von Rufen über eine Kommunikationsverbindung, wobei das Verfahren die Schritte enthält:

   Übertragen der Mehrzahl von Rufen an eine Ortsvermittlung;
   Ausweisen eines Rufes an einen Internet-Dienstbereitsteller, welcher im Folgenden als ISP bezeichnet wird; und
   Multiplexen jedes Rufes, welcher als ein Ruf an einen ISP ausgewiesen ist, wobei das Multiplexen den Schritt eines Zusammenfassens von n Rufen, welche als ein Ruf an einen ISP ausgewiesen sind, in einem zugewiesenen Zeitschlitz enthält, wobei n eine positive Ganzzahl oder ein Bruchteil ist; und
   Übertragen der zusammengefassten Rufe über die Kommunikationsverbindung im zugewiesenen Zeitschlitz.

2. Verfahren nach Anspruch 1, bei welchem jeder Ruf eine Ruf-Kennung enthält, so dass der Ruftyp auf Basis einer Wiedererkennung der Ruf-Kennung ausgewiesen wird.

3. Verfahren nach einem der vorhergehenden Ansprüche, bei welchem der Zeitschlitz dynamisch zugewiesen wird.

4. Verfahren nach Anspruch 3, bei welchem der Zeitschlitz auf Basis einer gemessenen Bandbreitengröße zugewiesen wird, welche für den Ruf erforderlich ist.

5. Verfahren nach einem der vorhergehenden Ansprüche, bei welchem die Zuweisung eines Zeitschlitzes auf der Basis eines Bedienens eines zuerst gekommenen ist.

**6.** Verfahren nach einem der vorhergehenden Ansprüche, bei welchem das Verfahren ferner den Schritt enthält:

Empfangen des zusammengefassten Rufs an einer Ziel-Ortsvermittlung;
Demultiplexen des zusammengefassten Rufs durch Trennen des zusammengefassten Rufs in seine separaten, verschiedenen Rufe; und
Übertragen der separaten, verschiedenen Rufe an ihr Ziel.

**7.** Kommunikationssystem zum Kommunizieren einer Mehrzahl von Rufen über eine Kommunikationsverbindung, wobei die Kommunikationsverbindung zumindest zwei Ortsvermittlungen verbindet, wobei das System enthält:

ein Mittel zum Übertragen der Mehrzahl von Rufen an eine der zumindest zwei Ortsvermittlungen;
ein Mittel zum Ausweisen eines Rufes an einen Internet-Dienstbereitsteller, welcher im Folgenden als ISP bezeichnet ist;
ein Mittel zum Multiplexen jedes Rufes, welcher als ein Ruf an einen ISP ausgewiesen ist, wobei das Multiplex-Mittel ein Mittel zum Zusammenfassen von n Rufen, welche als ein Ruf an einen ISP ausgewiesen sind, in einen zugewiesenen Zeitschlitz enthält; und
ein Mittel zum Übertragen der zusammengefassten Rufe im zugewiesenen Zeitschlitz über die Kommunikationsverbindung an eine weitere der zumindest zwei Ortsvermittlungen.

**8.** Kommunikationssystem nach Anspruch 7, bei welchem der Ruf eine Ruf-Kennung und ein Mittel zum Wiedererkennen der Ruf-Kennung enthält.

**9.** Kommunikationssystem nach einem der Ansprüche 7 oder 8, bei welchem die Kommunikationsverbindung eine leitungsvermittelte Verbindung eines PSTN enthält.

**10.** Kommunikationssystem nach einem der Ansprüche 7 bis 9, welches ferner ein Termin-Mittel zum Terminieren der Rufe enthält, um einen Zeitschlitz zuzuweisen.

**11.** Kommunikationssystem nach einem der Ansprüche 7 bis 10, bei welchem das System ferner enthält:

ein Mittel zum Empfangen des zusammengefassten Rufes an der weiteren aus den zumindest zwei Ortsvermittlungen;
ein Mittel zum Demultiplexen des zusammengefassten Rufes durch Trennen des zusammengefassten Rufes in seine separaten, verschiedenen Rufe; und
ein Mittel zum Übertragen der separaten, verschiedenen Rufe an ihr Ziel.

## Revendications

**1.** Procédé pour la communication d'une pluralité d'appels par une liaison de communication, le procédé comprenant les étapes qui consistent :

à transférer la pluralité d'appels à un central urbain :
à identifier un appel à un fournisseur de service Internet, appelé ci-après ISP ; et
à multiplexer chaque appel identifié en un appel pour un ISP, le multiplexage comprenant
l'étape de combinaison de n appels identifiés comme étant un appel à un ISP dans un créneau temporel assigné, où n est un entier positif ou une fraction ; et
à émettre les appels combinés par la liaison de communication dans le créneau temporel assigné.

**2.** Procédé selon la revendication 1, dans lequel chaque appel comprend un identificateur d'appel de façon que le type d'appel soit identifié sur la base d'une reconnaissance de l'identificateur d'appel.

**3.** Procédé suivant l'une quelconque des revendications précédentes, dans lequel le créneau temporel est assigné dynamiquement.

**4.** Procédé suivant la revendication 3, dans lequel le créneau temporel est assigné sur la base d'une grandeur mesurée d'une bande passante demandée par l'appel.

**5.** Procédé suivant l'une quelconque des revendications précédentes, dans lequel l'assignement d'un créneau temporel s'effectue sur la base du premier arrivé, premier servi.

**6.** Procédé suivant l'une quelconque des revendications précédentes, dans lequel le procédé comprend en outre l'étape qui consiste :

à recevoir l'appel combiné à un central urbain de destination ;
à démultiplexer l'appel combiné en séparant l'appel combiné en ses appels distincts et séparés ; et
à transférer les appels distincts et séparés à leur destination.

**7.** Système de communication pour la communication d'une pluralité d'appels par une liaison de communication, la liaison de communication connectant au moins deux centraux urbains, le système comportant :

un moyen pour transférer la pluralité d'appels à l'un des au moins deux centraux urbains ;
un moyen pour identifier un appel à un fournisseur de service Internet, désigné ci-après ISP ;
un moyen pour multiplexer chaque appel identifié en un appel à un ISP, le moyen de multiplexage comprenant un moyen destiné à combiner n appels identifiés comme étant un appel à un ISP dans un créneau temporel assigné ; et
un moyen destiné à émettre les appels combinés dans le créneau temporel assigné par la liaison de communication vers un autre des, au moins deux, centraux urbains.

**8.** Système de communication selon la revendication 7, dans lequel l'appel comprend un identificateur d'appel et un moyen pour reconnaître l'identificateur d'appel.

**9.** Système de communication selon l'une des revendications 7 ou 8, dans lequel la liaison de communication comprend une connexion à commutation de circuit d'un PSTN.

**10.** Système de communication selon l'une quelconque des revendications 7 à 9, comportant en outre un moyen de planification destiné à planifier les appels pour assigner un créneau temporel.

**11.** Système de communication selon l'une quelconque des revendications 7 à 10, dans lequel le système comporte en outre :

un moyen destiné à recevoir l'appel combiné audit autre des, au moins deux, centraux urbains ;
un moyen destiné à démultiplexer l'appel combiné en séparant l'appel combiné en ses appels distincts et séparés ; et
un moyen pour transférer les appels distincts et séparés à leur destination.

Fig. 1

Fig. 2

Fig. 3a

Fig. 3b

Fig. 4

Fig. 5

Call 1    300c        300b                    300a

Call 2    310c        310b                    310a

Call 3            320c        320b        320a

T3    300c    320c    300b    310b    300a    310a

T2            310c                    320b

T1                    320b                    320a

## Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5809070 A
- EP 905998 A